# FASCICULE DE BREVET EUROPEEN

(11) **EP 1 118 482 B1**
(45) Date de publication et mention de la délivrance du brevet: **21.03.2007**
(21) Numéro de dépôt: 00118738.4
(22) Date de dépôt: 30.08.2000
(51) Int. Cl.: B60H 1/32, F04B 27/14

(54) **Procédé pour commander une boucle de climatisation comprenant un compresseur à cylindrée variable**
Verfahren zum Regeln eines Klimaanlagekreislaufes mit variablem Verdrängungskompressor
A method of controlling an air conditioning circuit having a variable displacement compressor

(30) Priorité: 10.09.1999 FR 9911369
(43) Date de publication de la demande: 25.07.2001
(73) Titulaire: VALEO SYSTEMES THERMIQUES, 78320 Le Mesnil Saint-Denis (FR)
(72) Inventeur: Liu, Jin Ming, 78700 Conflans St Honorine (FR); Hamery, Bruno, 75014 Paris (FR)

(56) Documents cités:
- EP-A- 0 353 764
- EP-A- 0 393 950
- US-A- 4 815 300

## Description

L'invention concerne la climatisation de l'habitacle des véhicules automobiles.

On fait appel communément pour cette fonction à une boucle de fluide réfrigérant comprenant un compresseur, un condenseur, un détendeur et un évaporateur, ce dernier étant en contact avec un flux d'air à refroidir.

À l'origine, le compresseur était entraîné en permanence par le moteur du véhicule de manière à produire un débit de flux de réfrigérant déterminé par la vitesse du moteur. Le flux d'air fortement refroidi par l'évaporateur traversait ensuite le radiateur de chauffage de l'habitacle pour être ajusté à la température voulue.

Le refroidissement de l'air, suivi d'un réchauffement, était peu satisfaisant en termes d'économie d'énergie. Pour y remédier, on a eu recours à des compresseurs à cylindrée variable, dits à commande interne, dont le débit pouvait être réglé, indépendamment de leur vitesse de rotation, grâce à une vanne dont la position dépendait de la pression d'entrée et de la pression de sortie du fluide. Les réglages obtenus n'étant pas encore suffisamment fins, on a mis au point des compresseurs à cylindrée variable à commande externe. Ces compresseurs possèdent une électrovanne, de préférence hacheuse, dont le courant d'alimentation détermine la pression d'entrée du fluide dans le compresseur. Cette pression étant égale, à une perte de charge près, à celle régnant dans l'évaporateur, laquelle détermine la température de fonctionnement de l'évaporateur, on peut ainsi régler avec précision l'efficacité de la boucle de climatisation. Un exemple de compresseur à cylindrée variable à commande externe est décrit dans EP-A-0 353 764.

Le but de l'invention est de simplifier et de rendre plus économique la conduite d'une boucle de climatisation utilisant un tel compresseur.

L'invention vise notamment un procédé pour commander une boucle de climatisation de l'habitacle d'un véhicule automobile comprenant un compresseur, un condenseur, un détendeur et un évaporateur, de manière à régler à un niveau optimal, en fonction des besoins de climatisation, la température d'un flux d'air refroidi par contact avec l'évaporateur, le compresseur étant du type à cylindrée variable à commande externe par un courant de commande alimentant une vanne incorporée au compresseur et propre à établir à l'entrée de celui-ci une pression qui est déterminée par ledit courant de commande.

Selon l'invention, aucun capteur n'est prévu pour mesurer la température dudit flux d'air et on utilise ledit courant de commande pour évaluer ladite température, en combinaison avec des paramètres qui relient cette dernière à ladite pression à l'entrée du compresseur.

La température du flux d'air ayant traversé l'évaporateur est fonction de la température d'évaporation dans l'évaporateur, du débit du flux d'air, de son degré hygrométrique et de sa température en amont de l'évaporateur. Le débit du flux d'air peut dépendre de l'état d'un pulseur qui le produit, de la position d'un volet de recyclage de l'air de l'habitacle et de la vitesse du véhicule. Enfin, comme indiqué plus haut, la relation entre la température d'évaporation dans l'évaporateur et la pression du fluide réfrigérant à l'entrée du compresseur dépend du débit du fluide réfrigérant dans la boucle. Tous ces paramètres, qui sont choisis dans le cadre de la conduite de l'installation de climatisation, ou qui sont déterminables, directement ou indirectement, par des moyens existants, peuvent être pris en compte pour évaluer la température du flux d'air en aval de l'évaporateur, sans avoir recours à un capteur à cet effet et en économisant ainsi le coût d'un tel capteur et le coût de main-d'oeuvre pour sa mise en place.

Dans les installations connues utilisant un compresseur à cylindrée variable à commande externe, le signal du capteur de température du flux d'air est utilisé pour adapter le débit frigorifique aux besoins de climatisation, c'est-à-dire pour augmenter la cylindrée du compresseur lorsque la production de froid est inférieure aux besoins ou la réduire lorsque la production de froid est supérieure aux besoins. Il est également utilisé pour détecter un risque de givrage de l'évaporateur et réduire en conséquence la cylindrée du compresseur.

Selon l'invention, on peut utiliser aux mêmes fins le courant de commande et les paramètres précités.

Le procédé selon l'invention peut être mis en oeuvre en utilisant tous moyens connus pour l'élaboration et le traitement des signaux, notamment dans le domaine de la climatisation des véhicules automobiles.

## Revendications

1. Procédé pour commander une boucle de climatisation de l'habitacle d'un véhicule automobile comprenant un compresseur, un condenseur, un détendeur et un évaporateur, de manière à régler à un niveau optimal, en fonction des besoins de climatisation, la température d'un flux d'air refroidi par contact avec l'évaporateur, le compresseur étant du type à cylindrée variable à commande externe par un courant de commande alimentant une vanne incorporée au compresseur et propre à établir à l'entrée de celui-ci une pression qui est déterminée par ledit courant de commande, **caractérisé en ce qu'**aucun capteur n'est prévu pour mesurer la température dudit flux d'air et qu'on utilise ledit courant de commande pour évaluer ladite température, en combinaison avec des paramètres qui relient cette dernière à ladite pression à l'entrée du compresseur.

2. Procédé selon la revendication 1, dans lequel lesdits paramètres comprennent l'un au moins des paramètres suivants: état d'un pulseur produisant ledit flux d'air, position d'un volet de recyclage de l'air de l'habitacle, vitesse du véhicule, degré hygrométrique et température du flux d'air incident, débit du fluide réfrigérant dans la boucle.

3. Procédé selon l'une des revendications 1 et 2, dans lequel on utilise le courant de commande et lesdits paramètres pour augmenter la cylindrée du compresseur lorsque la production de froid est inférieure aux besoins ou la réduire lorsque la production de froid est supérieure aux besoins.

4. Procédé selon l'une des revendications précédentes, dans lequel on utilise le courant de commande et lesdits paramètres pour détecter un risque de givrage de l'évaporateur et réduire en conséquence la cylindrée du compresseur.

## Claims

1. Process for commanding an air conditioning circuit for the cockpit of an automobile vehicle, comprising a compressor, a condenser, a regulator and an evaporator, in order to regulate to an optimal level, according to the air conditioning requirements, the temperature of an air flow that is cooled by contact with the evaporator, wherein the compressor is of the variable capacity type controlled externally by a command current powering a valve incorporated into the compressor and capable of establishing at its inlet a pressure which is determined by the said command current, **characterised in that** no sensors are provided to measure the temperature of the said air flow and **in that** the said command current is used to evaluate the said temperature, in association with the parameters that link the latter to the said pressure at the inlet of the compressor.

2. Process of claim 1, in which the said parameters comprise at least one of the following parameters: state of a pulsing device generating the said air flow, position of a flap for recycling the air in the cockpit, speed of the vehicle, degree of hygrometry and temperature of the incident air flow, flow rate of the cooling liquid in the circuit.

3. Process of any of claims 1 or 2, in which the command current and the said parameters are used to increase the capacity of the compressor when the cold production is below the requirements or to reduce it when the cold production is above the requirements.

4. Process of any of the previous claims, in which the command current and the said parameters are used to detect a risk of frosting of the evaporator and to reduce consequently the capacity of the compressor.

## Patentansprüche

1. Verfahren zur Steuerung eines Klimatisierungskreisläufs des Innenraums eines Kraftfahrzeugs, der einen Kompressor, einen Kondensator, ein Druckminderventil und einen Verdampfer umfasst, um entsprechend der Klimatisierungsbedürfnisse die Temperatur eines Kühlluftströms auf ein optimales Niveau zu regeln, durch Kontakt mit dem Verdampfer, wobei der Kompressor vom Typ mit variablem Hubraum mit externer Steuerung durch einen Steuerstrom, der ein Ventil speist, das in den Kompressor eingebaut ist und am Eingang des Kompressors einen Druck aufbauen kann, der durch den besagten Steuerstrom festgelegt wird, **dadurch gekennzeichnet, dass** kein Messfühler zur Messung der Temperatur des besagten Luftstroms vorgesehen ist und dass der besagte Steuerstrom zur Auswertung der besagten Temperatur eingesetzt wird, in Verbindung mit Parametern, die letztere mit dem besagten Druck am Eingang des Kompressors verbinden.

2. Verfahren gemäß Anspruch 1, bei dem die besagten Parameter mindestens einen der folgenden Parameter umfassen:
Zustand eines Luftkühlers, der den besagten Luftstrom erzeugt, Position einer Klappe zur Rückführung der Luft des Fahrzeuginnenraums, Geschwindigkeit des Fahrzeugs, relative Luftfeuchte und Temperatur des anfallenden Luftstroms, Durchfluss des Kühlmittels in dem Kreislauf.

3. Verfahren gemäß einem der Ansprüche 1 und 1, in dem ein Steuerstrom und die besagten Parameter eingesetzt werden, um den Hubraum des Kompressors zu vergrößern, wenn die Kälteproduktion über dem Bedarf liegt.

4. Verfahren gemäß einem der vorherigen Ansprüche, bei dem der Steuerstrom und die besagten Parameter zur Erfassung einer Vereisungsgefahr des Verdampfers eingesetzt werden und folglich zur Reduzierung des Hubraums des Kompressors.
